Europäisches Patentamt

European Patent Office

Office européen des brevets

(19)

(11) Numéro de publication: **0 032 206**
**A1**

(12) # DEMANDE DE BREVET EUROPEEN

(21) Numéro de dépôt: 80107798.3

(22) Date de dépôt: 11.12.80

(51) Int. Cl.³: **C 21 B 5/00**
**B 65 G 53/66, F 23 K 1/00**

(30) Priorité: 27.12.79 LU 82036

(43) Date de publication de la demande:
22.07.81 Bulletin 81/29

(84) Etats contractants désignés:
AT BE DE FR GB IT NL SE

(71) Demandeur: PAUL WURTH S.A.
32 rue d'Alsace
Luxembourg(LU)

(72) Inventeur: Ulveling, Léon
rue Dr Jos Peffer
Howald(LU)

(74) Mandataire: Meyers, Ernest et al,
c/o FREYLINGER & ASSOCIES Postfach 1153, 46 rue du
Cimetière
Luxemburg(LU)

(54) Procédé et installation d'injection de quantités dosées de matières pulvérulentes par voie pneumatique dans une enceinte se trouvant sous pression variable et application à un four à cuve.

(57) L'injection pneumatique de poussière de charbon dans un haut fourneau (8) est réalisée par la formation d'un courant pneumatique dont le fluide de propulsion est de l'air froid normalement destiné à stabiliser la température du vent chaud et dans lequel on introduit la poussière par un sas (24) à rotor alvéolaire. Pour assurer le dosage optimal malgré les fluctuations de pression à l'intérieur du four on règle la quantité $(Q_N)$ d'air de propulsion en fonction de la pression $(P_c)$ due four et on règle la quantité $(Q)$ de poussière de charbon introduite par le sas (24) de manière que la chute de pression $\Delta P$ dans la voie de transport pneumatique reste constante.

./...

EP 0 032 206 A1

Fig. 6

- 1 -

Procédé et installation d'injection de quantités dosées de matières pulvérulentes par voie pneumatique dans une enceinte se trouvant sous pression variable et application à un four à cuve

Le problème de l'injection de matières pulvérulentes par voie pneumatique dans une enceinte sous pression a été résolu par le procédé et l'installation proposés dans le brevet luxembourgeois No 81 388. L'application de ce procédé est particulièrement intéressante pour l'injection de combustibles solides dans un haut fourneau en remplacement des produits pétroliers devenant de plus en plus chers et de plus en plus rares. Toutefois, un problème particulier dans cette application est la perturbation de la température du vent chaud par l'air de propulsion des combustibles solides qui sont injectés par voie pneumatique dans les porte-vent. Ce problème a pu être résolu par le procédé et l'installation proposés dans le brevet luxembourgeois 81 519 selon lequel on utilise comme fluide de propulsion pneumatique une partie de l'air froid destiné à la station de mélange se trouvant en aval des cowpers. De cette manière, la quantité totale d'air froid mélangée au vent chaud pour avoir une température constante ne change pas, la différence étant qu'une partie du mélange, au lieu d'être effectuée dans la station de mélange, est effectuée au niveau de l'injection du combustible solide dans le porte-vent ou dans les tuyères.

Il existe toutefois un autre problème dans une installation comme celle proposée par le brevet luxembourgeois 81 519, qui est celui de la perte de charge dans la voie de transport pneumatique. En effet, dans ce brevet, il a été proposé un surpresseur pour compenser cette perte de charge, de manière que le mélange fluide de propulsion combustible puisse être injecté dans le four à l'encontre de la pression qui règne dans celui-ci. Or, la pression dans le four n'est pas constante et subit des fluctuations pouvant atteindre, en valeur absolue, 1,5 bars dont il doit être tenu compte pour assurer l'injection de combustible dans le four.

Une solution à ce problème serait de faire tourner le surpresseur constamment à un régime répondant aux conditions extrêmes de fonctionnement, notamment aux pressions maximales pouvant régner dans le four avec une demande maximale en quantité de combustible. Toutefois, cette solution n'est nullement avantageuse du point de vue économique, étant donné qu'au régime inférieur, il y aurait un gaspillage sensible d'énergie de fonctionnement du surpresseur, ce qui se répercutera négativement, et de façon sensible, sur le prix de revient de la tonne de fonte.

Une autre solution serait de commander le régime du surpresseur en fonction des variations de pression à l'intérieur du four, ces variations étant connues et constamment surveillées. Toutefois, cette solution est liée à un autre problème, étant donné que la perte de charge dans la voie de transport pneumatique est non seulement fonction de la quantité de combustible par unité de fluide de propulsion, mais également de la pression à l'intérieur du four et ceci de manière non linéaire. Par conséquent, un asservissement du régime du surpresseur pour avoir dans la voie de transport pneumatique la pression minimale nécessaire à l'injection du combustible dans le four est, surtout à cause de la non-linéarité de la relation entre la perte de charge et les fluctuations de la pression à l'intérieur du four, extrêmement compliqué voire impossible du point de vue technique.

Le but de la présente invention est de prévoir un nouveau procédé du genre décrit dans le préambule qui permette, moyennant une régulation simple de différents paramètres, d'effectuer l'injection du combustible solide dans des conditions optimales et correspondant à un minimum d'énergie nécessaire à la réaliser. Un autre objectif de l'invention est une installation pour la mise en oeuvre de ce procédé, ainsi que son application à l'injection de combustibles solides dans un four à cuve.

A cet effet, l'invention propose un procédé d'injection de quantités dosées de matières pulvérulentes par voie pneumatique dans une enceinte se trouvant sous pression variable à travers une voie de transport pneumatique alimentée en matière pulvérulente et en fluide de propulsion sous pression injecté à travers un surpresseur, caractérisé en ce que l'on varie la quantité de fluide de propulsion en fonction des fluctuations de pression dans l'enceinte, en respectant la double condition que, pour une pression donnée dans l'enceinte, la quantité de fluide de propulsion soit minimale mais suffisante pour assurer une vitesse de propulsion sans risque de formation de bouchon, en ce que l'on surveille continuellement les variations de pression dans la voie de transport pneumatique et en ce que l'on règle la quantité de matière pulvérulente introduite dans cette voie de transport, de manière que la chute de pression le long de la voie de transport soit maintenue à une valeur déterminée.

La variation de la quantité de fluide de propulsion en fonction des fluctuations de pression dans l'enceinte est effectuée suivant une relation linéaire.

Cette régulation de la quantité de fluide de propulsion, généralement de l'air, fait que la perte de charge dans la voie de transport pneumatique soit constante pour une quantité de matière pulvérulente déterminée et ceci sur toute la plage de variations de pression à l'intérieur de l'enceinte. Autrement dit, on a linéarisé la relation entre la pression nécessaire dans la voie de transport pneumatique et la pression à l'intérieur du four. Ceci permet une simple régulation du surpresseur en adaptant son régime aux variations de pression dans le four.

Cette régulation entraînant également une relation linéaire entre la perte de charge dans la voie de transport et la quantité horaire totale de matière pulvérulente à injecter, on règle l'introduction de matière pulvérulente dans la voie de transport en fonction d'éventuelles variations de chutes de pression dans la voie de transport pour que ces chutes de pression soient maintenues à la valeur correspondant à la quantité horaire de matière pulvérulente à injecter.

L'invention concerne également une installation comprenant un dispositif d'introduction de matière pulvérulente dans une voie de transport pneumatique connecté à un surpresseur pour alimenter la voie de transport en fluide de propulsion, caractérisée par un clapet automatique disposé entre le surpresseur et le dispositif d'introduction de matière pulvérulente et actionnée par un dispositif de commande en fonction de la pression momentanée à l'intérieur de l'enceinte.

Le dispositif d'introduction est de préférence un sas à rotor alvéolaire dont la vitesse de rotation est commandée en fonction de variations de pression dans la voie de transport.

L'invention propose également l'application de ce procédé et de cette installation à un four à cuve dans lequel la matière pulvérulente est un combustible solide, caractérisé en ce que l'on prévoit une voie de transport pneumatique avec un clapet automatique et un sas à rotor alvéolaire pour chaque couple de tuyères.

D'autres particularités et caractéristiques de l'invention ressortiront de la description détaillée d'un mode de réalisation présenté ci-dessous, à titre d'exemple non limitatif, en référence aux figures dans lesquelles :

La figure 1 montre un graphique illustrant la relation entre la pression du fluide de propulsion et la pression régnant dans l'enceinte pour différentes densités de matière solide.

Les figures 2a, 2b et 2c illustrent des graphiques analogues pour différentes quantités de matière pulvérulente et pour différentes quantités d'air de propulsion.

Les figures 3a, 3b, 3c, 3e, 3d et 3f indiquent, pour différentes quantités de matière pulvérulente, la relation linéaire entre la quantité d'air de propulsion et la pression à l'intérieur de l'enceinte.

La figure 4 est un graphique montrant la relation linéaire entre les courbes des différentes figures 3 et la quantité horaire de matière à injecter.

La figure 5 est un graphique montrant la relation linéaire entre la perte de charge dans la voie de transport pneumatique et la quantité horaire de matière injectée.

La figure 6 montre un schéma synoptique d'une installation pour la mise en oeuvre du procédé selon l'invention.

L'invention sera décrite, à titre d'illustration, en référence à son application dans une installation telle que proposée par le brevet luxembourgeois 81 519. Dans cette application, le fluide de propulsion sera de l'air froid, tandis que les matières pulvérulentes sont de la poudre de charbon. L'enceinte sous pression sera un haut fourneau. Il est toutefois évident que l'invention est également applicable pour d'autres fluides de propulsion, pour d'autres matières pulvérulentes et pour d'autres enceintes sous pression.

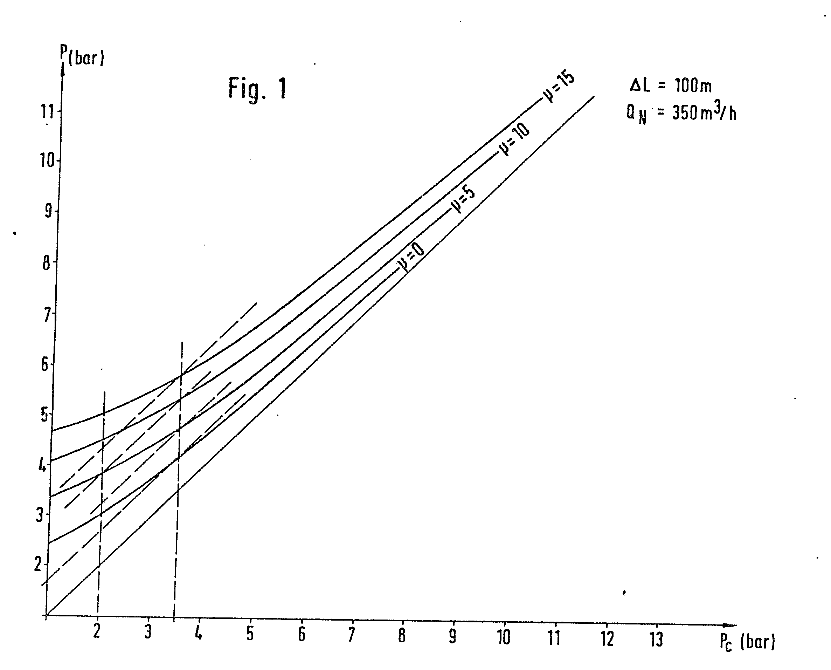

La figure 1 illustre une série de courbes montrant la pression minimale nécessaire en aval du surpresseur pour injecter le fluide dans le haut fourneau dans lequel règne une contrepression indiquée par "$P_c$" et portée en abscisse sur le graphique. Les pressions ont été représentées, aussi bien en ordonnée qu'en abscisse, en bars. Les courbes ont été calculées pour une conduite de transport d'une longueur de cent mètres et pour une quantité d'air de propulsion de trois cent cinquante mètres cube à l'heure.

La droite sous $45^o$ représente les conditions statiques correspondant à l'équilibre, c'est-à-dire pour lesquelles il n'y a pas de circulation dans la voie de transport pneumatique. Le paramètre des différentes courbes est la densité $\mu$ représentant le nombre de kilos de poussière de charbon par kilo d'air de propulsion à l'heure. La courbe inférieure pour laquelle $\mu$ est égal à zéro, correspond à l'injection d'air pur, tandis que au fur et à mesure que la densité de charbon augmente, les courbes remontent en ordonnée. La courbe correspondant à $\mu$ = 10 représente une injection de 3.500 kilos de poussière de charbon à l'heure.

La perte de charge dans la voie de transport pneumatique, c'est-à-dire la différence de pression $\Delta P$ entre un point immédiatement en aval du surpresseur et le point d'injection dans le four, correspond à la différence d'ordonnée entre un point déterminé de l'une des courbes et le point correspondant sur la droite à $45^o$ ayant la même abscisse. Vu que les courbes ne sont pas parallèles, cette différence de pression $\Delta P$ varie non seulement d'une courbe à l'autre, mais également en fonction de la valeur absolue et momentanée de la pression $P_c$ à l'intérieur du four. Si cette variation de pression $\Delta P$ est relativement faible pour les valeurs élevées de $P_c$ où le faisceau de courbes se rapproche exponentiellement de la droite à $45^o$, les va-

riations $\Delta P$ sont néanmoins sensibles pour les valeurs inférieures et notamment dans la plage des variations normales de la contrepression à l'intérieur du four, c'est-à-dire entre 2 et 3,5 bars.

Or, les courbes de la figure 1 représentent les courbes de pression optimales, c'est-à-dire celles avec une pression minimale, mais suffisante, pour qu'il y ait une vitesse minimale de circulation dans la voie de transport pneumatique, c'est-à-dire pour qu'il n'y ait pas de risque de formation de bouchon. Il est bien entendu qu'une pression supérieure à celle représentée par le graphique, par exemple pour la courbe $\mu$ = 10, une pression de P = 7 bars au lieu de 5 bars pour Pc = 3 bars, remplirait les conditions nécessaires à l'injection, mais un tel mode de fonctionnement n'est pas avantageux du point de vue économique, étant donné qu'il faudrait faire tourner le surpresseur à un régime plus que suffisant, ce quicauserait des pertes énergétiques.

Par contre, il n'est pas possible d'asservir le surpresseur de manière que celui-ci fonctionne chaque fois à un régime correspondant au régime optimal représenté par les courbes de la figure 1, étant donné que la réalisation technique d'une telle régulation est très difficile, voire impossible.

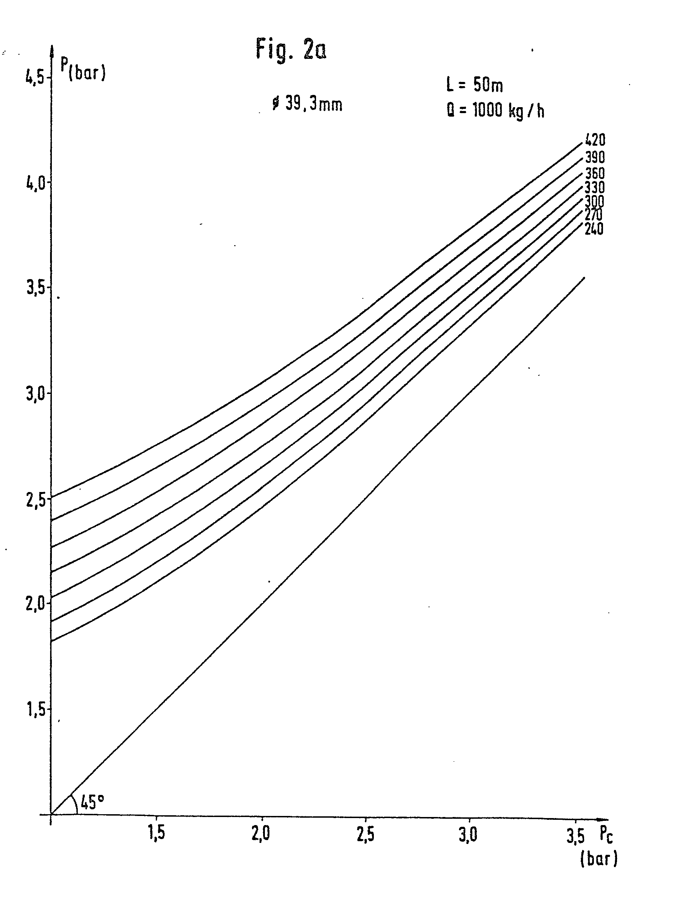

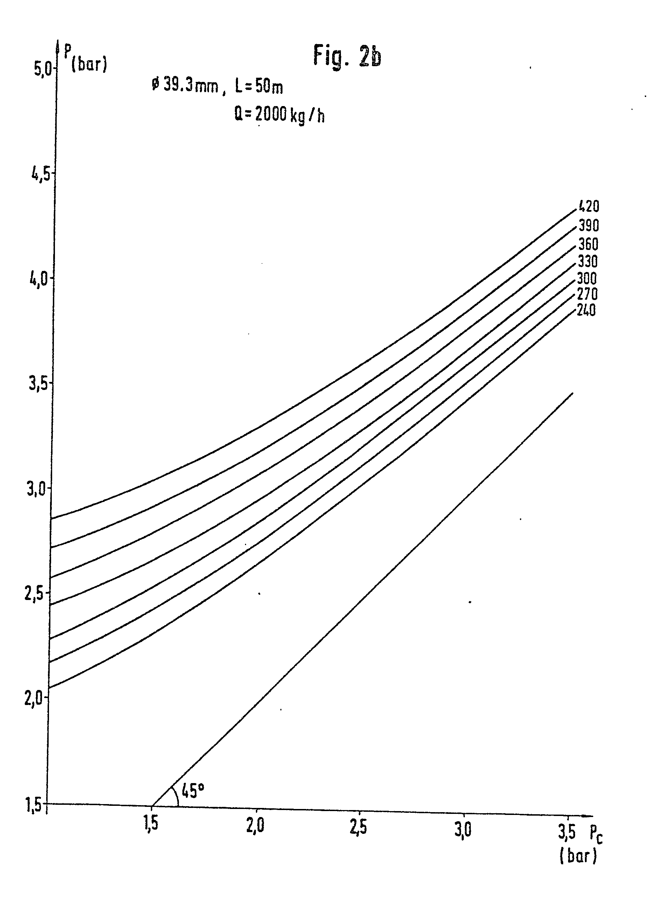

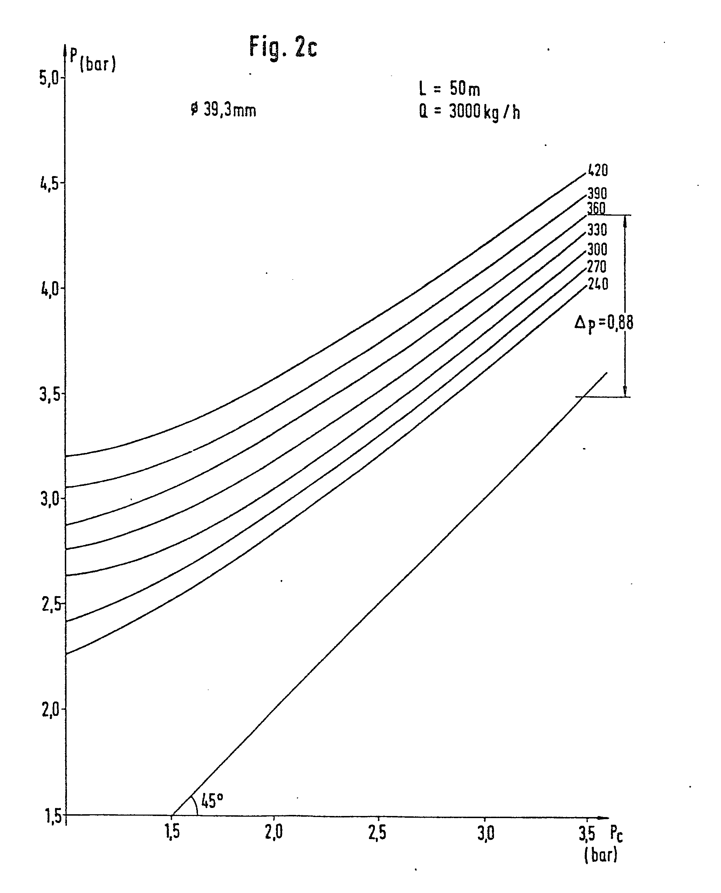

Pour pouvoir effectuer une telle régulation de la pression, il faudrait pouvoir se baser sur des relations plus simples et, de préférence, sur des relations linéaires. A cet effet, on va d'abord considérer les courbes de la figure 1 sous une forme légèrement modifiée, pour différents paramètres et différentes conditions de départ. Ces courbes sont illustrées sur les graphiques des figures 2a, 2b et 2c. La figure 2a illustre une famille de courbes analogues à celles de la figure 1 et montre la relation entre la pression P immédiatement en aval du surpresseur et la contrepression $P_c$ à l'intérieur de l'enceinte, avec comme paramètre la quantité d'air de propulsion en mètres cube par heure. Les valeurs de départ constantes sont la longueur de la conduite L = 50 mètres, son diamètre : 39,3 mm et la quantité de poussière de charbon Q = 1.000 Kg/heure.

La figure 2b montre une famille de courbes analogues à celles de la figure 2a mais pour des quantités de charbons Q = 2.000 Kg/heure, alors que pour la figure 2c, la quantité de poussière de charbon est Q = 3.000 Kg/heure. En comparant les trois graphiques des figures 2a, 2b et 2c, on voit que pour des conditions identiques, une augmentation de la quantité Q de poudre de charbon écarte davantage les familles de courbes entre elles, c'est-à-dire que la perte de charge est proportionnelle à la quantité de poudre de charbon. Autrement dit, pour une contrepression donnée, par exemple 2,5 bars, la pression P est sur le graphique de la figure 2b pour chacune des courbes, supérieure aux pressions correspondantes des courbes de la figure 2a, et inférieure aux pressions correspondantes des courbes de la figure 2c.

Une relation linéaire entre la pression P et la contrepression $P_c$ serait représentée sur les figures 2a, 2b et 2c par une droite et on pourrait s'imaginer une telle droite parallèlement à la droite montrée à $45^o$. Une telle droite imaginaire correspondrait donc à une perte de charge $\Delta P$ constante sur toute la longueur de la conduite de transport et pour toutes les valeurs de $P_c$. Etant donné qu'une telle droite imaginaire coupe les différentes courbes représentées sur les figures 2a, 2b et 2c, courbes caractérisées par le paramètre variable de la quantité d'air, on pourrait s'imaginer qu'en variant, de manière appropriée, la quantité d'air injectée dans la conduite pour propulser la poussière de charbon, on obtiendrait une relation linéaire entre la pression P et la contrepression $P_c$ et pouvant être représentée par les droites imaginaires dont question ci-dessus.

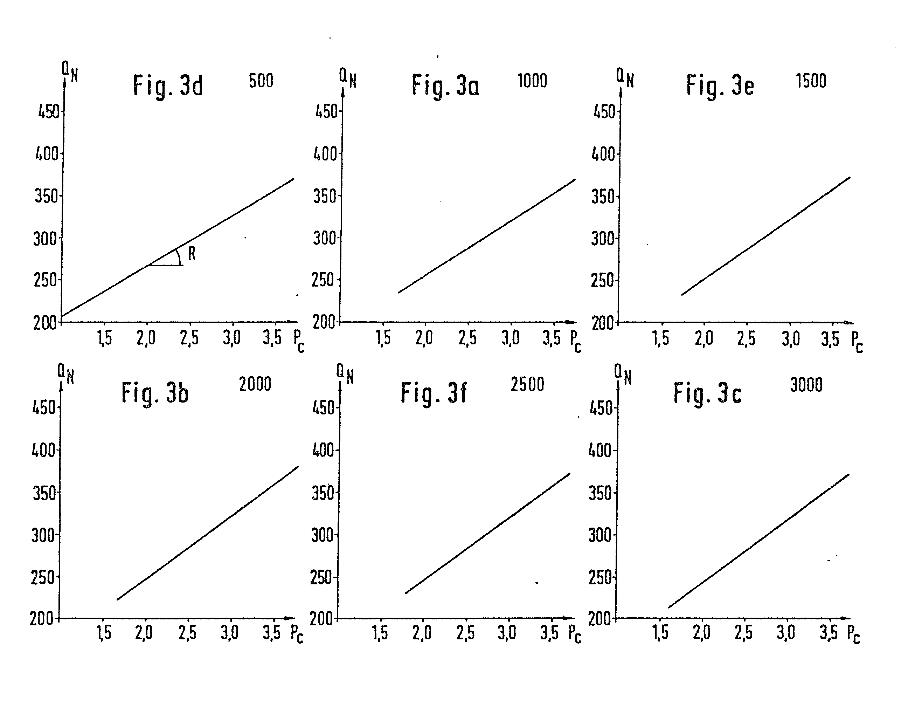

On pourrait donc rechercher, en traçant une parallèle à la droite de $45^o$ sur les figures 2, c'est-à-dire une droite correspondant à un $\Delta P$ constant, quels sont les points d'intersection avec les différentes courbes sur ces figures et dresser graphiquement la relation entre la quantité d'air de propulsion et la contrepression $P_c$. Ces graphiques sont illustrés par les figures 3a à 3f pour différentes quantités de charbon, à savoir pour les valeurs de 500 kilos, 1.000 kilos, 1.500 kilos, 2.000 kilos, 2.500 kilos et 3.000 kilos, correspondant respectivement aux figures 3d, 3a, 3e, 3b, 3f et 3c. Ces courbes n'ont toutefois pas été dressées graphiquement mais ont été calculées point par point à partir de la formule suivante :

$$\Delta P = \frac{L}{d} \cdot \frac{W^2}{2g}_L \cdot \gamma_L \ (\lambda_L + \lambda_Z \cdot \mu)$$

dans laquelle $\Delta P$ représente la perte de charge entre le surpresseur et le point d'injection dans le haut fourneau

        L : la longueur de la conduite

        d : le diamètre de la conduite

        W : la vitesse de l'air de propulsion

        g : 9.81

        $\gamma_L$: le poids spécifique de l'air

        $\mu$ : le poids en kilos de la poussière de charbon par kilo d'air et par heure

        $\lambda_L$ et $\lambda_Z$ : des coefficients auxiliaires se rapportant respectivement à l'air et à la poussière de charbon et qui sont constants pour une pression donnée.

Ces graphiques des figures 3 montrent donc que pour une perte de charge $\Delta P$ constante sur toute la plage de variations de la contrepression, la quantité d'air de propulsion est une fonction linéaire de cette contrepression. Autrement dit, en variant la quantité d'air de propulsion en fonction de la contrepression et de manière linéaire, on arrive à maintenir une perte de charge constante sur toute la longueur de la conduite de transport, c'est-à-dire une variation linéaire de la pression immédiatement en aval du surpresseur en fonction de la contrepression dans le four à cuve.

Ceci veut dire, du point de vue pratique, que la variation de la quantité d'air injectée dans la conduite de transport pneumatique, selon le graphique concerné des figures 3a à 3e, permet une linéarisation de la relation entre la pression de propulsion et la contrepression dans le four, c'est-à-dire une régulation plus simple du surpresseur en comparaison avec celle nécessaire pour suivre les courbes de la figure 1. Par conséquent, au lieu de devoir effectuer une seule régulation, qui est beaucoup trop compliquée du point de vue technique, on effectue deux régulations linéaires très simples, à savoir celle du régime du surpresseur et celle de la quantité d'air.

Les graphiques des figures 3a à 3f ont été établis pour une vitesse minimale de 15 mètres par seconde correspondant à la vitesse nécessaire pour une circulation dans la voie de transport et pour éviter le risque de formation de bouchons.

Pour l'établissement de ces graphiques à partir de l'équation ci-dessus, la valeur de $\Delta P$ a été fixée arbitrairement, de manière que l'injection soit possible pour un régime de fonctionnement maximal. Ce régime a lieu lorsque la contrepression dans le four est maximale, c'est-à-dire 3,5 bars pour une injection de 3.000 Kg de poussière de charbon à l'heure. Pour ce régime maximal, une quantité d'air de 360 $m^3$ à l'heure est suffisante. Or, d'après la figure 2c correspondant à la quantité de charbon de 3.000 Kg à l'heure, on voit que pour une contrepression de 3,5 bars, la pression, pour la courbe de 360 $m^3$ d'air, se situe à 0,88 bars au-dessus de la droite à 45°, c'est-à-dire que pour une quantité de charbon de 3.000 Kg à l'heure, la perte de charge $\Delta P = 0,88$ bars.

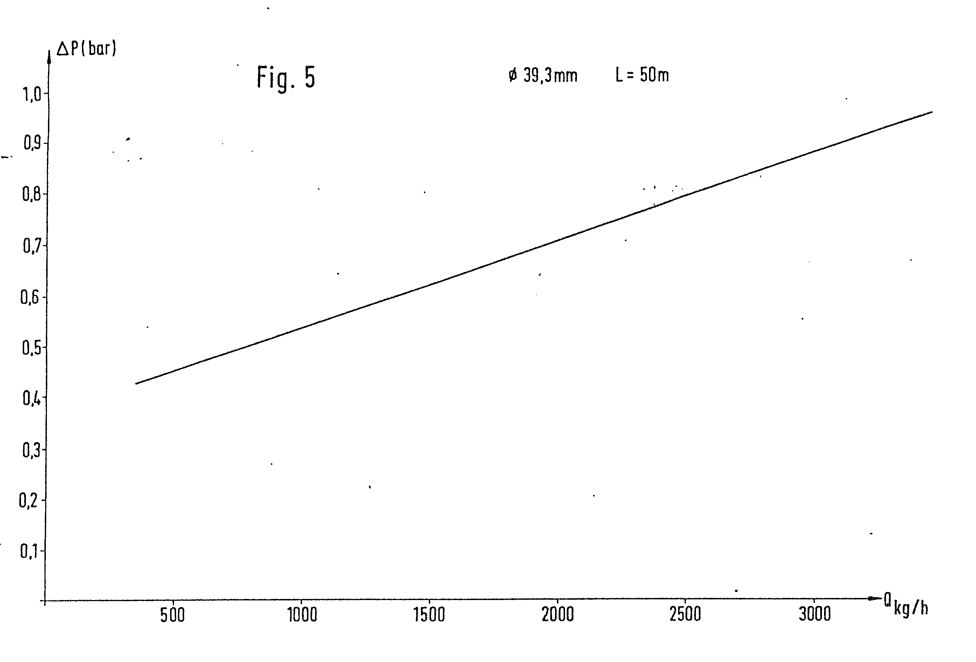

En calculant cette perte de charge $\Delta P$ pour chacune des quantités de charbon pour lesquelles les graphiques des figures 3a à 3f ont été établis et en représentant ces six valeurs de $\Delta P$ graphiquement en fonction de la quantité de charbon, on obtient le graphique de la figure 5. Celui-ci montre qu'il existe une relation linéaire entre $\Delta P$ et la quantité de charbon lorsque la quantité d'air est en relation linéaire avec la contrepression $P_C$ selon les graphiques des figures 3a à 3f.

En analysant les figures 3a à 3f sous un autre aspect, on constate que la pente des différentes droites augmente lorsque la quantité de charbon injectée augmente. En calculant pour les différents graphiques des figures 3a à 3f, le gradien $\frac{\Delta Q}{\Delta P_C}$ et en portant ce rapport graphiquement en fonction de la quantité de charbon, on constate que ces différents points se trouvent sur une droite. Ainsi,

par exemple, le gradient de la figure 3c pour 3.000 Kg de charbon est égal à 80, le gradient de la figure 3e pour 1.500 Kg de charbon est égal à 70 et    par extrapolation, on trouve pour Q = 0, c'est-à-dire pour de l'air pur, le gradient est égal à 60.

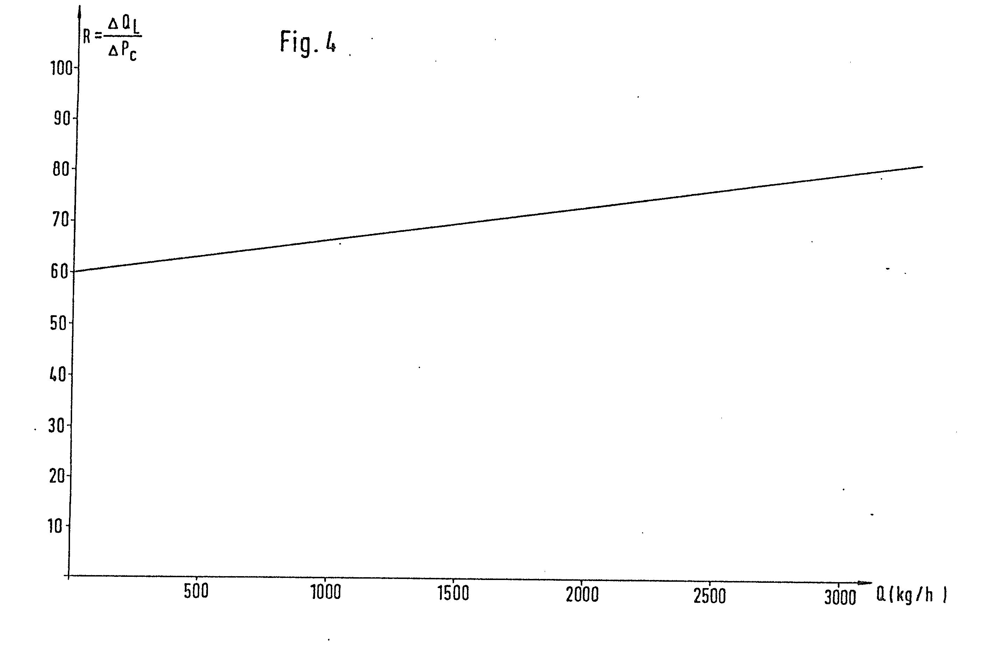

On voit donc que la pente de la droite sur la figure 4 = $\dfrac{20}{3000}$ = $\dfrac{1}{150}$. Par conséquent, on a l'équation suivante :

$$R = 60 + (Q \times \frac{1}{150})$$

Le graphique de la figure 4 permet par conséquent de connaître pour chaque quantité de poussière de charbon à injecter la pente de la droite représentant la variation de la quantité d'air en fonction de la contrepression $P_c$ comme montré sur les figures 3a à 3f. La quantité d'air est par conséquent bien déterminée pour chaque contrepression et pour chaque quantité de charbon injectée.

La figure 5 montre la chute de pression pour chaque valeur de quantité de charbon, autrement dit, la pression nécessaire en aval du surpresseur pour injecter une quantité donnée de charbon dans le four. Par exemple, pour injecter 2.500 Kg de poussière de charbon à l'heure, $\Delta$P = 0,8 bars, c'est-à-dire que la pression P doit être de 0,8 bars supérieure à celle régnant dans le four.

Etant donné que la perte de charge doit rester constante, on se sert également du graphique de la figure 5 pour assurer une auto-régulation de manière à remplir cette condition. A cet effet, il suffit de mesurer en deux points quelconques de la voie de transport pneumatique la pression et de surveiller la différence de pression entre ces deux points. S'il se produit une fluctuation, c'est-à-dire un écart momentané de la valeur de consigne, on peut varier légèrement la quantité Q de poudre de charbon pour rétablir la situation.

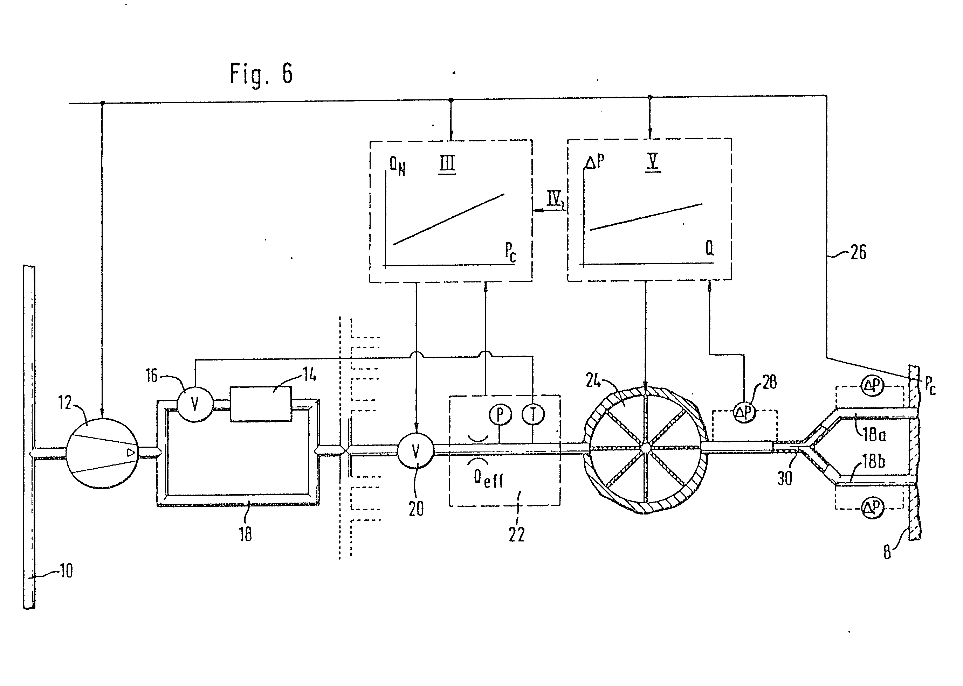

On va maintenant illustrer le procédé décrit ci-dessus en référence à la figure 6, montrant une installation pour injecter moyennant ce procédé de la poudre de charbon dans un four à cuve indiqué schématiquement par la référence 8. Dans cette installation seront mis en oeuvre les principes du brevet luxembourgeois 81 519, c'est-à-dire l'air de pro-

- 11 -

pulsion destiné à injecter le charbon dans le four 8 proviendra d'une conduite 10 connectée en amont d'une station de mélange associée aux cowpers et contenant une partie de l'air normalement destiné à cette station de mélange.

Un surpresseur 12 est destiné à envoyer l'air de la conduite 10 en quantités suffisantes et à la pression P nécessaire pour propulser la poudre de charbon. Dans le brevet luxembourgeois 81 519, il a été proposé d'inclure un refroidisseur immédiatement en aval du surpresseur pour compenser le réchauffement de l'air survenu dans le surpresseur. Celui-ci a également été incorporé dans l'installation de la figure 6 et est indiqué par la référence 14. Toutefois, ce refroidisseur se trouve en parallèle sur la conduite d'air sous pression 18 et la quantité d'air traversant ce refroidisseur 14 est commandée au moyen d'une vanne automatique 16 réglée en fonction de la température de l'air de propulsion en aval dans la conduite. Si la température de l'air de propulsion est trop élevée, la vanne permet à une plus grande quantité d'air de passer par le refroidisseur 14.

On retrouve ensuite dans la conduite un clapet automatique 20 destinée à régler le débit total de l'air de propulsion, un dispositif de contrôle 22 destiné à déceler la quantité effective de l'air circulant dans la conduite ainsi que sa pression et sa température et enfin un sas à rotor alvéolaire 24 par lequel est admise la poudre de charbon. L'installation montrée sur la figure 6 permet d'alimenter en même temps deux porte-vent ou tuyères et, à cet effet, la conduite se subdivise en aval du sas 24 en deux branches 18a et 18b, qui permettent d'injecter la poussière de charbon à travers les deux porte-vent dans le four à cuve.

Pour chaque couple de porte-vent, il est prévu un sas 24 avec des équipements auxiliaires, ce qui est représenté schématiquement par les subdivisions en pointillés de la conduite 18 entre le refroidisseur 14 et le clapet automatique 20.

La référence 26 représente schématiquement l'information concernant la contrepression $P_c$ à l'intérieur du four 8 et les fluctuations de cette pression. Cette information est utilisée pour la commande du surpresseur 12,

- 12 -

c'est-à-dire pour la régulation de sa vitesse de rotation de manière linéaire, en fonction de $P_c$ en respectant la perte de charge conformément au graphique de la figure 5.

L'information 26 est également utilisée pour un dispositif de régulation représenté par la référence III et établissant une relation conforme aux figures 3 pour la commande automatique de l'ouverture du clapet 20 en fonction de la contrepression $P_c$.

Il est à noter que la quantité d'air circulant dans la conduite 18 n'est pas seulement fonction du clapet 20, mais également de la pression et de la température. Pour ne pas devoir considérer ces deux paramètres, les explications graphiques et mathématiques ci-dessus ont été faites pour des quantités normales ou "étalon" représentées par $Q_N$. La relation entre la quantité normale d'air $Q_N$ et la quantité circulant effectivement dans la conduite 10 $Q_{eff}$ est représentée par les deux équations duales suivantes :

$$Q_{eff} = Q_N \cdot \frac{1}{p} \cdot \frac{273^O + T^O}{273^O}$$

$$Q_N = Q_{eff} \cdot p \cdot \frac{273^O}{273^O + T^O}$$

Par conséquent, pour assurer la position correcte du clapet et laisser passer la quantité voulue $Q_{eff}$ d'air, on effectue une correction de $Q_N$ établie par le dispositif de régulation III en faisant intervenir la température absolue et la pression mesurée par le dispositif de contrôle 22 et selon la relation ci-dessus.

Le sas à rotor alvéolaire 24 est dirigé par un dispositif de commande représenté par V et fonctionnant selon les graphiques de la figure 5. A cet effet, il est prévu en aval du sas 24 un dispositif 28 pour détecter la différence de pression entre deux points quelconques. Connaissant la perte de charge totale pour une quantité déterminée de charbon à injecter, on connaît également le $\Delta P$ correspondant mesuré par le dispositif 28 entre ces deux points quelconques et toute fluctuation ou écart de la valeur de consigne est transmise par ce dispositif 28 au dispositif de commande V pour augmenter ou diminuer à travers le sas 24 la quantité Q de charbon selon la figure 5 et rétablir ainsi le $\Delta$P nécessaire.

Afin d'observer la condition établie par le graphique de la figure 4, le dispositif de régulation III est assujetti au dispositif de commande V, ce qui est représenté par la ligne IV. On obtient de ce fait la quantité exacte $Q_N$ d'air en fonction de la contrepression $P_c$ et en fonctionde la quantité de charbon Q injectée par le sas 24.

A l'endroit de la subdivision de la conduite 18, pour former les branches 18a et 18b, il est avantageux de prévoir un déflecteur 30 pour commander une répartition égale de la quantité de charbon entre les deux branches 18a et 18b. A cet effet, on peut mesurer les chutes de pression $\Delta$P le long de chacune des deux branches 18a et 18b et, en comparant les résultats de ces mesures, utiliser ces variations pour une commande automatique de la position du déflecteur 30.

---

# REVENDICATIONS

1. - Procédé d'injection de quantités dosées de matières pulvérulentes par voie pneumatique dans une enceinte se trouvant sous pression variable à travers une voie de transport pneumatique alimentée en matière pulvérulente et en fluide de propulsion sous pression injecté à travers un surpresseur, caractérisé en ce que l'on varie la quantité de fluide de propulsion en fonction des fluctuations de pression dans l'enceinte, en respectant la double condition que, pour une pression donnée dans l'enceinte, la quantité de fluide de propulsion soit minimale mais suffisante pour assurer une vitesse de propulsion sans risque de formation de bouchon, en ce que l'on surveille continuellement les variations de pression dans la voie de transport pneumatique et en ce que l'on règle la quantité de matière pulvérulente introduite dans cette voie de transport, de manière que la chute de pression le long de la voie de transport soit maintenue à une valeur déterminée.

2. - Procédé selon la revendication 1, caractérisé en ce que la variation de la quantité de fluide de propulsion en fonction des fluctuations de pression dans l'enceinte est effectuée suivant une relation linéaire.

3. - Procédé selon la revendication 2, caractérisé en ce que la variation de la quantité de fluide de propulsion est effectuée de manière que le rapport entre la quantité de fluide de propulsion et la contrepression dans l'enceinte soit directement proportionnel à la quantité de matière pulvérulente injectée.

4. - Procédé selon la revendication 1, caractérisé en ce que l'on règle le régime du surpresseur en fonction des fluctuations de pression dans l'enceinte.

5. - Procédé selon la revendication 1, caractérisé en ce que l'on règle l'introduction de matières pulvérulentes dans la voie de transport en fonction d'éventuelles variations de chutes de pression dans celle-ci pour que ces chutes de pression soient maintenues à la valeur correspondans à la quantité horaire de matières pulvérulentes à injecter.

- 15 -

6. - Procédé selon l'une quelconque des revendications 1 à 5, caractérisé en ce que l'on refroidit, au moins une partie de l'air après le surpresseur pour compenser un réchauffement subi dans celui-ci.

7. - Procédé selon l'une quelconque des revendications 2, 3 ou 6, caractérisé en ce que l'on effectue des corrections de la quantité déterminée de fluide de propulsion en fonction de la pression et de la température de ce fluide.

8. - Procédé selon l'une quelconque des revendications 1 à 7, caractérisé en ce que le fluide de propulsion est de l'air.

9. - Installation pour la mise en oeuvre du procédé selon l'une quelconque des revendications 1 à 8, comprenant un dispositif d'introduction de matière pulvérulente dans une voie de transport pneumatique connecté à un surpresseur pour alimenter la voie de transport en fluide de propulsion, caractérisée par un clapet automatique (20) disposé entre le surpresseur (12) et le dispositif d'introduction (24) de matières pulvérulentes et actionné par un dispositif de commande (III) en fonction de la pression momentanée $P_c$ à l'intérieur de l'enceinte (8).

10. - Installation selon la revendication 9, caractérisée en ce que le dispositif d'introduction (24) de matières pulvérulentes dans la voie de transport pneumatique est un sas à rotor alvéolaire.

11. - Installation selon l'une des revendications 9 ou 10, caractérisée par un dispositif (28) de détection des fluctuations de chute de pression dans la voie de transport pour commander un dispositif de contrôle (V) du dispositif d'introduction (24) de matières pulvérulentes.

12. - Installation selon la revendication 9, caractérisée par un dispositif de correction (22) comprenant des moyens de détection de la température et de la pression du fluide de propulsion et destiné à corriger des signaux de commande émis du dispositif (III) de régulation du clapet automatique (20).

13. - Installation selon la revendication 9, caractérisée par un refroidisseur (14) disposé en parallèle sur la voie de transport pneumatique en aval du surpresseur (12) le passage à travers ce refroidisseur (14) étant commandé par une vanne (16) en fonction de la température du fluide de propulsion.

14. - Application d'une installation selon les revendications 9 à 13, à l'injection par voie pneumatique, d'un combustible solide dans un four à cuve.

15. - Application selon la revendication 14, caractérisée en ce que le combustible est de la poudre de charbon.

16. - Application selon la revendication 14, caractérisée en ce que le combustible solide est de la poudre de lignite.

17. - Application selon l'une quelconque des revendications 14 à 16, caractérisée en ce que le fluide de propulsion est une partie de l'air froid qui était destiné à une station de mélange se trouvant en aval des cowpers destinés à alimenter le four en vent chaud.

18. - Application selon l'une quelconque des revendications 14 à 17, caractérisée par une voie de transport pneumatique avec un clapet automatique (20) et un sas à rotor alvéolaire (24) pour chaque couple de tuyères.

19. - Application selon la revendication 18, caractérisée en ce que la voie de transport pneumatique se subdivise en aval du sas à rotor alvéolaire (24) en deux branches (18a et 18b) connectées respectivement à une tuyère.

20. - Application selon la revendication 19, caractérisée par un déflecteur (30) destiné à diviser la quantité de combustible, de manière égale entre les deux branches 18a et 18b en fonction des variations de pression dans celles-ci.

Fig. 1

$\Delta L = 100m$
$Q_N = 350 \, m^3/h$

Fig. 2a

Fig. 2b

ø 39.3mm , L = 50m

Q = 2000 kg / h

Fig. 2c

Fig. 3d  500

Fig. 3a  1000

Fig. 3e  1500

Fig. 3b  2000

Fig. 3f  2500

Fig. 3c  3000

5 / 8

0032206

Fig. 4

$R = \dfrac{\Delta Q_L}{\Delta P_C}$

Q (kg/h)

Fig. 5

ø 39,3mm    L = 50m

7 / 8

0032206

0032206

Fig. 6

**Office européen des brevets**

**RAPPORT DE RECHERCHE EUROPEENNE**

| Catégorie | DOCUMENTS CONSIDERES COMME PERTINENTS | | Revendica-tion concernée |
|---|---|---|---|
| | Citation du document avec indication, en cas de besoin, des parties pertinentes | | |
| | US - A - 3 371 917 (L.E. MYLTING)<br>* Figures 1-13; revendications 1-28 * | | 1-3,5,<br>8-11,<br>14-16 |
| | -- | | |
| | US - A - 3 240 532 (W.D. AMNER)<br>* Figure 1; revendications 1-10 * | | 1-3,8,<br>9,14-<br>16 |
| | -- | | |
| | GB - A - 556 864 (BAILEY METERS & CONTROLS)<br>* Revendications 1-22; figures 1-16 * | | 1,5,8,<br>11,12,<br>14-16 |
| | -- | | |
| | US - A - 4 059 310 (J.J. WASKIE-WICZ)<br>* Revendications 1-12; figures 1,2 * | | 1,5,8,<br>10,11,<br>14-16 |
| | -- | | |
| | FR - A - 1 235 390 (I.R.S.D.)<br>* Figures 1-3; résumé * | | 1,5,8,<br>11,14-<br>16 |
| | -- | | |
| | US - A - 3 092 337 (R.C. PATTER-SON)<br>* Revendications 1-6; figures 1-4 * | | 1,5,8,<br>11,15,<br>16 |
| | -- | | |
| | DE - C - 424 228 (VEREINIGTE HUTTENWERKE BURBACH-EICH-DUDELINGEN)<br>* Figures 1,2; revendications 1-3 * | | 1,5,8,<br>11,<br>14-16 |
| | -- ./. | | |

**CLASSEMENT DE LA DEMANDE (Int. Cl. 3)**

C 21 B  5/00
B 65 G 53/66
F 23 K  1/00

**DOMAINES TECHNIQUES RECHERCHES (Int. Cl. 3)**

C 21 B  5/00
B 65 G 53/66
F 23 K  1/00
F 23 K  3/00
F 23 K  3/02

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 31-03-1981 | ELSEN |

OEB Form 1503.1   06.78

**Office européen des brevets**

**RAPPORT DE RECHERCHE EUROPEENNE**

| Catégorie | Citation du document avec indication, en cas de besoin, des parties pertinentes | Revendication concernée |
|---|---|---|
| | US - A - 3 050 018 (L. PEARSON)<br><br>* Revendications 1-6; figure 1; colonne 4, lignes 73-75; colonne 5, lignes 1-14 *<br><br>-- | 1,5,8, 11,14, 15,16 |
| | DE - A - 1 556 111 (MIAG MUHLENBAU UND INDUSTRIE)<br><br>* Figures; revendications 1-4 *<br><br>-- | 7,8 |
| | FR - A - 1 364 215 (THE N.W. KELLOGG COMPANY)<br><br>* Figures 1-5; revendications 1-14; page 10, colonne de gauche, lignes 1-19 *<br><br>---- | 1,6,8, 13,14, 15,16, 17 |

**DOCUMENTS CONSIDERES COMME PERTINENTS**

CLASSEMENT DE LA DEMANDE (Int. Cl. 3)

DOMAINES TECHNIQUES RECHERCHES (Int. Cl. 3)